# EUROPÄISCHE PATENTSCHRIFT

(11) **EP 1 481 465 B1**
(45) Veröffentlichungstag und Bekanntmachung des Hinweises auf die Patenterteilung: **01.02.2006**
(21) Anmeldenummer: 03714693.3
(22) Anmeldetag: 06.03.2003
(51) Int. Cl.: H02M 1/12, H02M 3/335

(54) **SCHALTNETZTEIL, INSBESONDERE FÜR MEDIZINISCHE GERÄTE**
SWITCHED-MODE POWER SUPPLY, PARTICULARLY FOR MEDICAL DEVICES
ALIMENTATION A DECOUPAGE, DESTINEE EN PARTICULIER A DES APPAREILS MEDICAUX

(30) Priorität: 07.03.2002 DE 20203714 U
(43) Veröffentlichungstag der Anmeldung: 01.12.2004
(73) Patentinhaber: Landwehr + Schultz Trafo GmbH, 34379 Calden (DE)
(72) Erfinder: MAARES, Matthias, 34127 Kassel (DE)
(74) Vertreter: Freiherr von Schorlemer, Reinfried
(86) Internationale Anmeldenummer: PCT/DE2003/000784
(87) Internationale Veröffentlichungsnummer: WO 2003/075442

(56) Entgegenhaltungen:
- EP-A- 0 504 835
- EP-A- 0 546 453
- DE-A- 19 940 540
- DE-C- 19 936 859
- US-A- 4 320 307
- US-A1- 2001 015 648
- PATENT ABSTRACTS OF JAPAN vol. 018, no. 369 (E-1576), 12. Juli 1994 (1994-07-12) & JP 06 098539 A (MURATA MFG CO LTD), 8. April 1994 (1994-04-08)
- PATENT ABSTRACTS OF JAPAN vol. 2000, no. 15, 6. April 2001 (2001-04-06) & JP 2000 341951 A (TOKO INC), 8. Dezember 2000 (2000-12-08)

## Beschreibung

Die Erfindung betrifft ein Schaltnetzteil der im Oberbegriff des Anspruchs 1 angegebenen Gattung zur Erzeugung einer Gleichspannung aus einer speisenden Netz-Wechselspannung, insbesondere für medizinische Geräte.

Schaltnetzteile dieser Art enthalten in der Regel zwei Eingangsklemmen, an die ein erster, zur Gleichrichtung der üblichen Netzspannung von z. B. 230 V bestimmter Gleichrichter angeschlossen ist, eine mit einem oder mehreren Leistungsschaltern versehene Schalteranordnung, einen dieser nachfolgenden Übertrager, einen an diesen angeschlossenen zweiten Gleichrichter und schließlich zwei zum Anschluß einer Last bestimmte Ausgangsklemmen, an denen die erzeugte Gleichspannung von z. B. 12 V abgegeben wird [US 2001/015 648 A1; Patent Abstracts of Japan, Publication Number 06 098539 A (Murata MFG Co Ltd.)]. Die Schalteranordnung bildet zusammen mit einem Steuerteil einen Regelkreis, in dem die Größe der erzeugten Gleichspannung als Istwert überwacht und die Schalteranordnung mittels des als Stelleinrichtung wirkenden Steuerteils so ein- und ausgeschaltet wird, daß die abgegebene Gleichspannung einen vorgegebenen Sollwert annimmt. Als Stellgröße wird dabei das Tastverhältnis bzw. die Impulsbreite der von den Leistungsschaltern abgegebenen Impulse verwendet, während als Last im medizinischen Bereich z. B. eine Infusionseinrichtung mit zugehörigen Pumpen, Alarmgebern und Rechnern dienen kann.

An die Stelle der Infusionseinrichtung können im Prinzip beliebige andere, auch im nicht medizinischen Bereich verwendete Geräte treten, die mit Gleichspannungen betrieben werden.

Bei Schaltnetzteilen dieser Art wird insbesondere im medizinischen Bereich zunehmend gefordert, daß nur sehr kleine maximale Ableitströme auftreten. Diese Ableitströme werden nach vorgegebenen Normen unterteilt in Erdableitströme, Gehäuseableitströme und Patientenableitströme. Erdableitströme sind dabei Ströme, die vom Schaltnetzteil durch oder über die Isolierung zu einem üblichen Schutzleiter fließen, während als Gehäuseableitströme solche Ströme bezeichnet werden, die vom Gehäuse des Schaltnetzteils oder dessen Teilen nicht durch den Schutzleiter, sondern durch eine andere äußere, leitfähige Verbindung zur Erde oder anderen Gehäuseabschnitten fließen. Schließlich ist als Patientenableitstrom derjenige Strom definiert, der von der Stromversorgung über den Patienten zur Erde fließen kann.

Der Patientenableitstrom muß bei einem bestimmungsgemäß funktionierenden medizinischen Gerät kleiner als 10 µA und beim Auftreten eines Fehlers in diesem Gerät kleiner als 50 µA sein. Manchmal werden für den Fall eines Fehlers sogar Patientenableitströme von weniger als 8 µA verlangt, z. B. wenn in speziellen Fällen mehrere, z. B. sechs derartige Geräte und Schaltnetzteile zu einem kompletten, einem einzigen Patienten zugeordneten Modul verbunden werden und verhindert werden muß, daß sich die Ableitströme im Modul zu einem Gesamtstrom von 50 µA oder mehr addieren. Für die anderen Ableitströme können entsprechend ebenfalls vorgewählte, sehr niedrige Grenzwerte festgelegt sein.

Neben der Forderung von kleinen Ableitströmen sind beim Bau der beschriebenen Schaltnetzteile die Grenzwerte der elektromagnetischen Verträglichkeit (nachfolgend kurz "EMV" genannt) zu berücksichtigen, insbesondere wenn mehrere Schaltnetzteile und Geräte der beschriebenen Art zu einem Modul vereinigt werden. Da die Schalteranordnungen der Schaltnetzteile mit hohen Frequenzen geschaltet werden, muß sichergestellt werden, daß sie keine störenden, hochfrequenten Signale abgeben, insbesondere keine leitungsgebundenen Funkstörspannungen, die über das speisende Netz übertragen werden könnten. Daher sind spezielle Maßnahmen vorzusehen, die meistens neben diversen Induktivitäten aus sogenannten X-Kondensatoren, die zur Entstörung zwischen den stromführenden Leitungen der Geräte dienen, und/oder sogenannten Y-Kondensatoren bestehen, die Isolierungen überbrücken und spannungsführende Leitungen mit der Gerätemasse oder einem Schutzleiter- (PE-) Anschluß des Geräts verbinden. Derartige X- und Y-Kondensatoren sind meistens zu einem sogenannten EMV-Netzfilter zusammengefaßt, das zwischen die Eingangsklemmen und den ersten Gleichrichter des eingangs bezeichneten Schaltnetzteils od. dgl. geschaltet ist.

Für die Zwecke der vorliegenden Erfindung sind hauptsächlich die Y-Kondensatoren bedeutsam. Ein bisher noch nicht befriedigend gelöstes Problem besteht nämlich darin, daß die für eine gute Funkentstörung brauchbaren Y-Kondensatoren (z. B. 1 nF oder mehr) im üblichen Frequenzbereich von 50 Hz bzw. 60 Hz bereits zu Ableitströmen von 100 µA oder mehr und damit zu weit größeren Ableitströmen führen, als den oben genannten z. B. 8 µA entspricht. Extrem niedrige (Patienten-) Ableitströme und eine deutliche Unterschreitung genormter Grenzwerte für leitungsgebundene Funkstörspannungen sind daher bei Anwendung üblicher Schaltnetzteile nicht miteinander vereinbar. Andere Versuche, beide Forderungen zu erfüllen, insbesondere durch die Anwendung herkömmlicher Stromversorgungen, die mit magnetischen Transformatoren ausgerüstet sind, führen gegenüber Schaltnetzteilen wegen der Anwendung normaler Transformatoren zu großvolumigeren und entsprechend schwereren Schaltungen und meistens auch zu einer eingeschränkten Funktion.

Der Erfindung liegt daher das technische Problem zugrunde, das Schaltnetzteil der eingangs bezeichneten Art so auszubilden, daß es trotz Unterschreitung der für die Funkentstörung maßgeblichen Grenzwerte zu Ableitströmen führt, die im bisher nicht möglichen Bereich unterhalb von 50 µA liegen.

Zur Lösung dieser Aufgabe dienen die kennzeichnenden Merkmale des Anspruchs 1.

Die Erfindung geht von der Überlegung aus, daß bei Schaltnetzteilen mit Resonanzwandler-Topologie die Aussendung von Störsignalen reduziert ist, weil derartige Schaltnetzteile in der Nähe der Resonanzfrequenz betrieben werden. Das führt in dem als HF-Transformator ausgebildeten Übertrager zu einem weitgehend sinusförmigen Stromverlauf und ermöglicht ein verlustarmes Schalten der im Schalter verwendeten Leistungshalbleiterelemente. Dadurch ist es möglich, die Kapazitäten der Y-Kondensatoren auf Werte zu begrenzen, die zu den gewünschten kleinen Ableitströmen führen. Durch die Anwendung einer Resonanzwandler-Topologie anstelle der für derartige Zwecke bisher angewendeten Pulsweitensteuerung ist es außerdem möglich, die im Hinblick auf kleine Baugrößen und geringe Gewichte bestehenden Vorteile von Schaltnetzteilen mit der Forderung nach sehr niedrigen Ableitströmen zu kombinieren, ohne dadurch Nachteile im Hinblick auf die elektromagnetische Verträglichkeit in Kauf nehmen zu müssen.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch einen Meßkreis für den Patientenableitstrom gemäß DIN EN 60601-1;
Fig. 2 schematisch ein Schaltbild eines erfindungsgemäßen Schaltnetzteils;
Fig. 3 beim Betrieb des Schaltnetzteils der Fig. 2 und an ausgewählten Stellen desselben auftretende Impulsformen;
Fig. 4 einen bevorzugten Arbeitsbereich für das Schaltnetzteil nach Fig. 2;
Fig. 5 das Ersatzschaltbild eines im Schaltnetzteil nach Fig. 2 verwendeten Übertragers; und
Fig. 6 schematisch die Wicklungsanordnung eines erfindungsgemäßen, im Schaltnetzteil nach Fig. 2 bevorzugt angewendeten Übertragers.

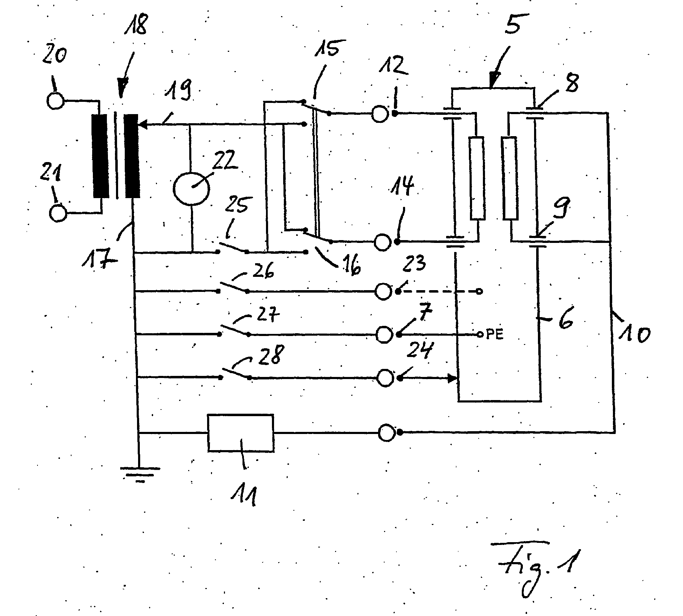

Fig. 1 zeigt einen Meßkreis, der speziell zur Ermittlung des Patientenableitstroms eines elektrischen Geräts geeignet ist, beispielsweise eines Schaltnetzteils 5 der Schutzklasse 1, das zur Stromversorgung eines medizinischen Geräts verwendet werden soll. Das Schaltnetzteil 5 enthält ein aus Metall oder Kunststoff bestehendes Gehäuse 6 mit einem Anschluß 7 (= PE), der normalerweise mit dem üblichen, grün-gelben Schutzleiterkabel verbunden und hier an Erdpotential, nachfolgend als "Erde" bezeichnet, gelegt wird. Außerdem besitzt das Schaltnetzteil 5 zwei Ausgänge 8 und 9, an die das medizinische Gerät bzw. Betriebsmittel angeschlossen werden soll, das eine Versorgungsspannung von z. B. 12 V benötigt. Im gezeigten Meßkreis sind die beiden Ausgänge 8 und 9 mittels einer Leitung 10 kurzgeschlossen und über eine Strommeßeinrichtung 11 mit der Erde verbunden.

Zwei Eingänge des Schaltnetzteils 5 sind über Anschlüsse 12 und 14 mit dem verstellbaren Kontakt je eines Schalters 15, 16 verbunden, der außerdem je zwei feststehende Kontakte aufweist, von denen der eine in Fig. 1 zu einem an die Erde gelegten Ausgang 17 eines Trenntransformators 18 führt und von denen der andere mit einem als verstellbarer Abgriff ausgebildeten weiteren Ausgang 19 verbunden ist, um die Ausgangsspannung des Trenntransformators 18 einstellen zu können. Zwei Eingangsklemmen 20, 21 des Trenntransformators 18 liegen an den beiden Leitungen eines üblichen Netzes (z. B. 230 V, Nennfrequenz = 50 Hz). Zwischen den Anschluß 17 und den Abgriff 19 ist ein Voltmeter 22 geschaltet.

Das Schaltnetzteil 5 kann außerdem einen Anschluß 23 für Betriebserde und einen Anschluß 24 für irgendein berührbares, metallisches Teil aufweisen, das nicht mit dem Anschluß 7 für das Schutzleiterkabel und nicht mit dem Anwendungsteil (= Last) verbunden ist. Zwischen die Anschlüsse 7, 23 und 24 und die Erde ist je ein Schalter 26, 27 bzw. 28 geschaltet. Mit einem Schalter 25 kann schließlich der Erdanschluß in den Versorgungsleitungen des Schaltnetzteils (Anschlüsse 12, 14) aufgetrennt werden.

Normgemäß wird mit dem Abgriff 19 des Trenntransformators 18 ein Wert in Höhe von 110 % der höchsten Bemessungsspannung der Netzspannung eingestellt. Dies entspricht z. B. bei 240 V Bemessungsspannung einem Maximalwert der speisenden Wechselspannung von 240 V x 1,1 = 264 V.

Zur Ermittlung des Ableitstroms können mit dem beschriebenen Meßkreis verschiedene Situationen simuliert werden. Hierzu ist es entweder möglich, einen oder mehrere der Schalter 25 bis 28 zu öffnen, um den entsprechenden Anschluß 7, 14, 23 bzw. 24 von der Erde zu trennen, oder die Schalter 15, 16 zu betätigen, um dadurch abweichend von Fig. 1 den Anschluß 12 alternativ zu dem Ausgang 19 und entsprechend den Anschluß 14 mit dem Abgriff 17 zu verbinden, d. h. die Netzspannung umzupolen.

Für die Zwecke der Erfindung wird gefordert, daß in keinem der simulierten Fälle, insbesondere bei Öffnung der Schalter 25 und/oder 27, ein Strom gemessen werden darf, der größer als z. B. etwa 50 *µ*A und mit besonderem Vorteil größer als 8 *µ*A ist, da der die Strommeßrichtung 11 durchfließende Strom hier der sogenannte Patientenableitstrom ist, der im Falle eines Fehlers den Patienten gefährden könnte. Dabei wäre es abweichend von Fig. 1 natürlich auch möglich, die Ausgänge 8, 9 nicht kurzzuschließen, sondern jeweils einzeln über die Strommeßeinrichtung 11 an Erde zu legen und zu prüfen.

Entsprechende Meßkreise können für den Erdableit- und den Gehäuseableitstrom vorgesehen werden.

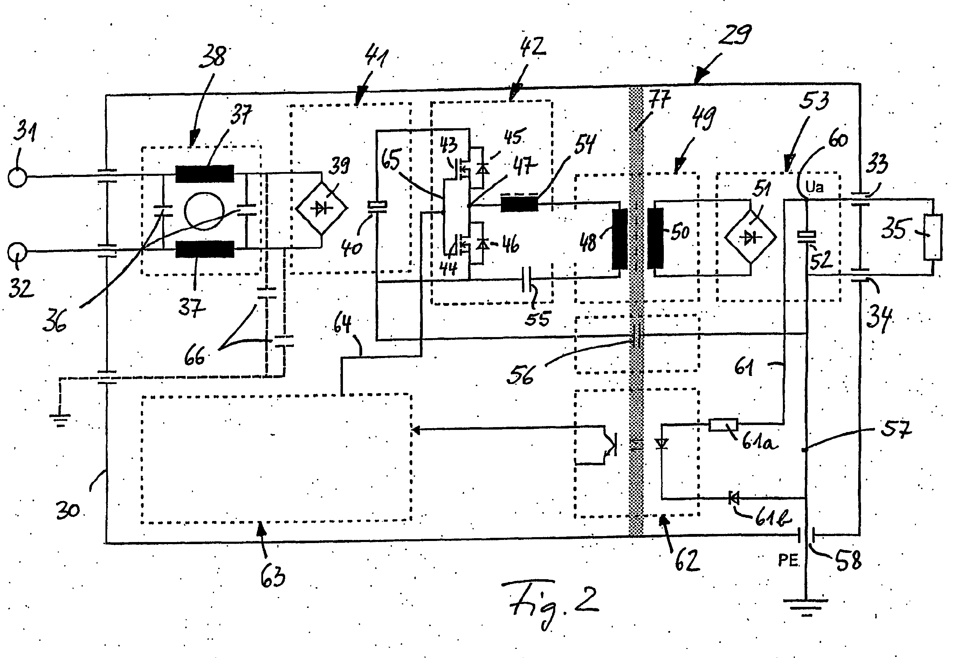

Fig. 2 zeigt Einzelheiten eines erfindungsgemäßen, insgesamt mit dem Bezugszeichen 29 versehenen Schaltnetzteils. Das Schaltnetzteil 29 enthält ein die nachfolgend beschriebenen Bauelemente umschließendes Gehäuse 30, zwei Eingänge 31, 32 zum Anschluß an das Netz und zwei Ausgänge 33, 34 zum externen Anschluß einer Last 35, z. B. eines medizinischen Geräts. Die Eingänge 31, 32 sind mit einem aus X-Kondensatoren 36 und Induktivitäten 37 zusammengesetzten EMV-Netzfilter 38 verbunden, das in bekannter Weise insbesondere zur Funkentstörung der stromführenden, mit den Eingängen 31, 32 verbundenen Leitungen dient. Die Induktivitäten 37 sind hier vorzugsweise als stromkompensierte Drossel ausgebildet. An das EMV-Netzfilter 38 ist ein Gleichrichter 39 angeschlossen, der mit einem der Glättung dienenden Elektrolytkondensator 40 einen Gleichstrom-Zwischenkreis 41 bildet. Die beiden Anschlüsse des Elektrolytkondensators 40 sind an eine Schalteranordnung 42 angeschlossen, die hier aus zwei in Serie liegenden und nach Art einer Gegentaktstufe verbundenen Leistungstransistoren 43, 44 und diesen parallel geschalteten Freilaufdioden 45, 46 gebildet ist. Die Leistungstransistoren 43, 44 werden so gesteuert, daß abwechselnd der eine (z. B. 43) geöffnet und der andere (z. B. 44) geschlossen ist bzw. umgekehrt. Ein Verbindungspunkt 47 beider Leistungstransistoren 43, 44 führt über eine Primärspule 48 eines Übertragers bzw. HF-Transformators 49 zum negativen Anschluß des Elektrolytkondensators 40.

Auf der Sekundärseite des Schaltnetzteils 29 weist der Übertrager 49 eine Sekundärspule 50 auf, die mit einem Gleichrichter 51 verbunden ist, an den ein der Glättung dienender Elektrolytkondensator 52 angeschlossen ist. An den beiden Anschlüssen des Elektrolytkondensators 52 wird die zu erzeugende Gleichspannung Uₐ von z. B. 12 V erhalten, an die mittels der Ausgänge 33, 34 die Last 35 angeschlossen ist.

Erfindungsgemäß ist zwischen den Verbindungspunkt 47 und den zugehörigen Anschluß der Primärspule 48 eine Induktivität 54 und zwischen den negativen Anschluß des Elektrolytkondensators 40 und den zugehörigen anderen Anschluß der Primärspule 48 eine Kapazität 55 geschaltet. Die Induktivität 54 und die Kapazität 55 bilden mit der hier im wesentlichen als ohmsche Last wirkenden Primärspule 48 einen Serienresonanzkreis.

Schließlich sind die Massen der Primärseite und der Sekundärseite des Übertragers 49, hier jeweils repräsentiert durch die negativen Anschlüsse der Elektrolytkondensatoren 40 und 52, durch einen Y-Kondensator 56 miteinander verbunden, wobei der negative Anschluß des Elektrolytkondensators 52 mittels eines Schutzleiters 57 zusätzlich mit einem PE-Anschluß 58 des Gehäuses 30 verbunden sein kann. Die Verbindung mit dem PE-Anschluß 58 hätte den Vorteil, daß der Patientenableitstrom beim normalen Betrieb Null ist und nur bei einer Unterbrechung der Leitung 57 aufgrund eines Fehlers auf Werte ansteigt, die größer als Null sind. Der Y-Kondensator 56 verbindet auf diese Weise die Massen der Primär- und Sekundärseite des Schaltnetzteils 29.

Die erzeugte Gleichspannung Uₐ wird an einem dem positiven Anschluß des Elektrolytkondensators 52 entsprechenden Meßpunkt 60 abgegriffen, über eine Meßleitung 61 mit einem Vorwiderstand 61a und einer hier als Zenerdiode 61b dargestellen Spannungsreferenz einem Optokoppler 62 zugeführt und von diesem auf ein Steuerteil 63 übertragen. Dieses weist einen Steuerausgang 64 auf, der mit einem gemeinsamen Steuereingang 65 der beiden Leistungstransistoren 43, 44 verbunden ist.

Die Betriebsweise des beschriebenen Schaltnetzteils 29 ist im wesentlichen wie folgt:

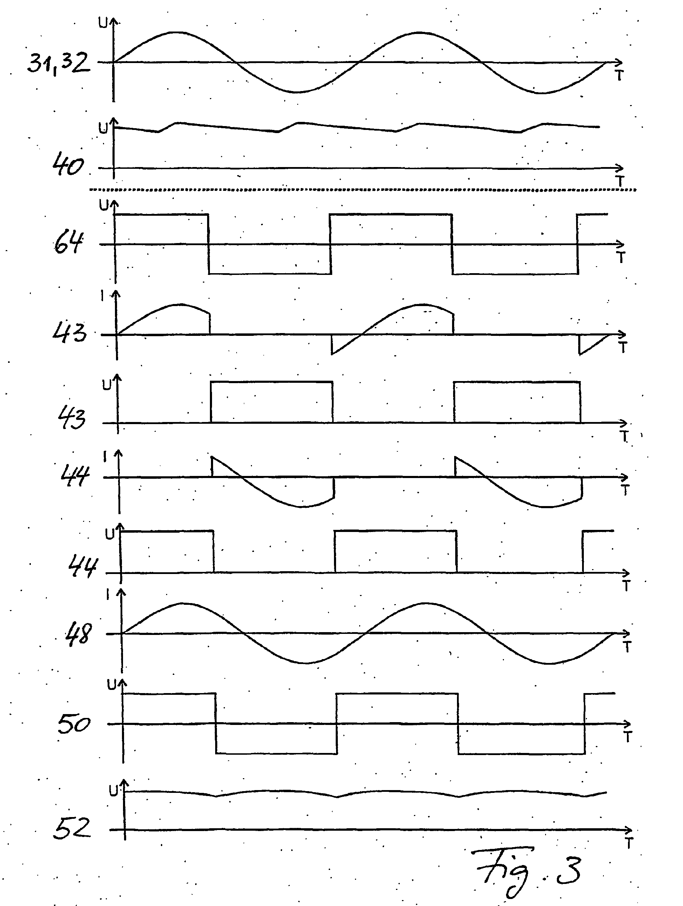

Die aus den Leistungstransistoren 43, 44 gebildete Gegentaktstufe und damit der Serienresonanzkreis 48, 54, 55 werden vom Steuerteil 63 mit einer Schaltfrequenz angestoßen, die stets etwas größer als die Resonanzfrequenz des Resonanzkreises 48, 54, 55 ist und z. B. 25 kHz beträgt. Die beiden Leistungstransistoren 43, 44 werden dabei abwechselnd und mit einem starren Tastverhältnis geöffnet und geschlossen, das im wesentlichen 50 : 50 beträgt. Der dadurch am Elektrolytkondensator 52 erhaltene Istwert der gewünschten Gleichspannung Uₐ wird mittels der Meßleitung 61 überwacht und an das Steuerteil 63 übermittelt, mittels dessen die Schaltfrequenz jeweils so geregelt wird, daß das Potential am Meßpunkt 60 genau einem gewünschten Wert von z. B. 12 V (Gleichspannung) entspricht, wobei dieser Wert im wesentlichen mit Hilfe des Übersetzungsverhältnisses n₁ : n₂ des Übertragers 49 vorgewählt werden kann. Sich dabei ergebende Strom- und Spannungsverläufe an den Eingängen 31 und 32, am Elektrolytkondensator 40, im Resonanzkreis, an der Primär- und Sekundärspule 48 des Übertragers 49, am Elektrolytkondensator 52 sowie am Steuereingang 65 des Schalters 42 sind schematisch in Fig. 3 dargestellt.

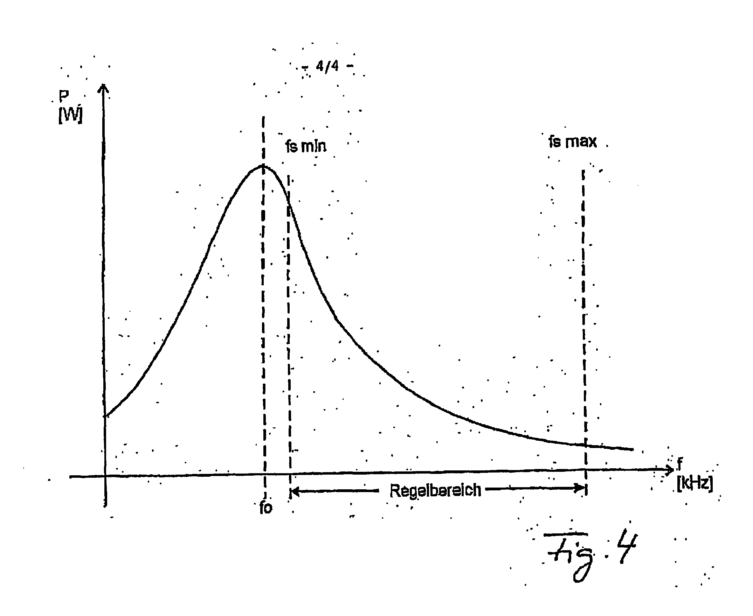

Das beschriebene Schaltnetzteil 29 ist erfindungsgemäß ein Resonanzkonverter-Schaltnetzteil, bei dem die gewünschte Gleichspannung Uₐ nicht durch die üblicherweise vorgesehene Pulsweitenmodulation, sondern durch Frequenzregelung konstant gehalten wird. Erfindungsgemäß wird somit die Frequenz, mit der die Schalteranordnung 42 angesteuert wird, als Stellgröße verwendet. Der Arbeitsbereich des aus den Bauelementen 41, 42, 49, 53 und 63 gebildeten Resonanzkonverters ergibt sich dabei in Abhängigkeit von der an die Last 35 abzugebenden Leistung P im wesentlichen aus Fig. 4, wonach die Frequenz bei maximaler Last 35 mit z.B. 25 kHz am kleinsten ist und bei sehr kleiner Last 35 z. B. auf Werte von 100 kHz ansteigen kann.

Bei herkömmlichen Schaltnetzteilen der Schutzklasse 1 bildet ein Y-Kondensator 66, wie in Fig. 2 gestrichelt angedeutet ist, einen Bestandteil des EMV-Netzfilters 38. Beim erfindungsgemäßen Schaltnetzteil 29 ist das EMV-Netzfilter 38 dagegen nur mit den X-Kondensatoren 36 versehen, während der Y-Kondensator die Massen der Elektrolytkondensatoren 40, 52 bzw. der Primärseite und der Sekundärseite des Übertragers 49 miteinander verbindet. Außerdem ist der Wert des Y-Kondensators 56 erfindungsgemäß so bemessen, daß er zu einem vorgewählten maximalen Ableitstrom führt. Soll dieser z. B. ca. 7 *µ*A betragen, kann dem Y-Kondensator 56 z. B. eine Kapazität von 50 pF gegeben werden, was bei einer Netzfrequenz von 50 Hz und einer angenommenen maximalen Netzspannung von 264 V zu einem Ableitstrom von maximal ca. 4,2 µA führt. Das gilt sowohl für den Patientenableitstrom als auch für den Erd- und den Gehäuseableitstrom, da alle diese Ströme über den Koppelkondensator 56 fließen. Überraschend hat sich gezeigt, daß in Verbindung mit dem EMV-Netzfilter 38 nach Fig. 2, das in den mit den Eingängen 31, 32 verbundenen Leitungen eine Induktivität 37 in Form einer stromkompensierten Drossel aufweist, eine Kapazität des Y-Kondensators 56 von 50 pF ausreicht, um im Hinblick auf die Funkentstörung weit unterhalb der vorgegebenen Grenzwerte zu bleiben.

Erfindungsgemäß wird daher das Problem eines kleinen Ableitstroms trotz ausreichender Funkentstörung im wesentlichen dadurch gelöst, daß für das Schaltnetzteil 29 eine im Hinblick auf Y-Funkstörungen arme Topologie (Resonanzkonverter) verwendet wird, der Y-Kondensator 56 nicht in das EMV-Netzfilter 38 integriert wird, wie dies bei Geräten der Schutzklasse 1 allgemein üblich ist, sondern zur Verbindung der Massenanschlüsse der Primär- und Sekundärseite des Übertragers 49 verwendet wird, und die Kapazität des Y-Kondensators 56 im Vergleich zu üblichen Werten von z. B. 1 nF und mehr auf nur z. B. 50 pF festgelegt wird. Möglich ist dies unter anderem dadurch, daß die Ströme durch die Primärspule 48 des Übertragers 49 weitgehend sinus- bzw. halbsinusförmig sind (Fig. 3) und die Leistungstransistoren 43, 44 wegen der Freilaufdioden 46, 47 nahezu leistungslos und daher ohne wesentliche Stromänderungen geschaltet werden können, was beides zur Reduzierung der Erzeugung von Oberwellen führt.

Nach einer besonders bevorzugten Ausführungsform der Erfindung werden die beschriebenen Verhältnisse noch dadurch verbessert oder wird die Einhaltung der Grenzwerte erst dadurch ermöglicht, daß die unvermeidliche parasitäre Koppelkapazität im Übertrager 49 reduziert wird. Über die Koppelkapazität könnten nämlich unerwünschte Ableitströme von der Primär- zur Sekundärseite fließen und sich Funkstörungen zum PE-Anschluß 58 und andere umgebende Bezugsmassen hin ausbreiten.

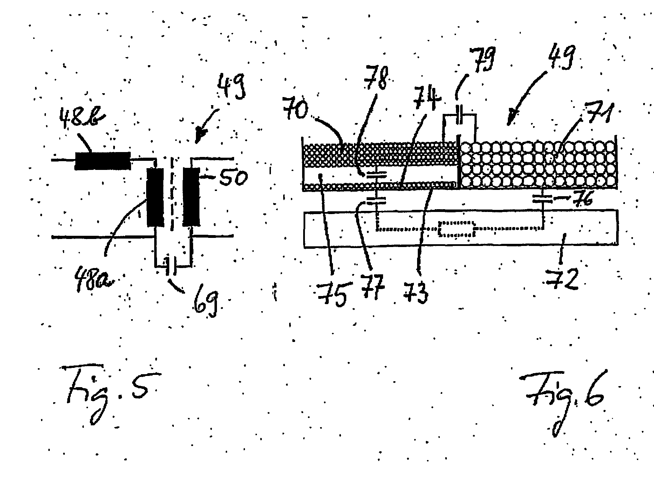

Das Ersatzschaltbild des Übertragers 49 ist in Fig. 5 schematisch dargestellt. Es zeigt, daß die Primärspule 48 (Fig. 2) eine Hauptinduktivität 48a und eine Streuinduktivität 48b besitzt und die Primärspule 48 durch eine parasitäre Koppelkapazität 69 mit der Sekundärwicklung 50 gekoppelt ist. Während die Streuinduktivität 48b in die Berechnung des Resonanzkreises 54, 55 einbezogen werden kann und daher hier nicht stört, sollte die Koppelkapazität 69, die z. B. durch die Spulenwicklungen und den Ferritkern des Übertragers 49 gebildet wird, möglichst klein gehalten werden. Dies wird erfindungsgemäß dadurch erreicht, daß einerseits Primär- und Sekundärwicklungen 70, 71 (Fig. 6) nebeneinander statt wie üblich übereinander und vorzugsweise koaxial auf einen zur Aufnahme eines Ferritkerns 72 od. dgl. bestimmten Spulenkörper 73 gewickelt werden und andererseits vorzugsweise zwischen die Primärwicklung 70 und den Spulenkörper 73 wenigstens eine volle Lage aus einer Schirmwicklung 74 angeordnet wird, die an einem Ende an die primärseitige Masse angeschlossen wird. Zwischen der Primärwicklung 70 und der Schirmwicklung 74 wird vorzugsweise eine Betriebsisolation 75 angebracht. Auf diese Weise können extrem niedrige Werte für die Koppelkapazität erreicht werden (z. B. 6 pF und weniger), so daß die über die Koppelkapazität 69 fließenden Ableitströme im Ausführungsbeispiel in der Größenordnung von nur z. B. 0,5 µA liegen, was nur einem Viertel bis Zehntel der sonst üblichen Werte entspricht. Die Koppelkapazität 69 setzt sich dabei, wie in Fig. 6 angedeutet ist, aus den Koppelkondensatoren 76, 77, 78 und 79 zusammen.

Insgesamt führt das beschriebene Schaltnetzteil 29 somit zu Ableitströmen von maximal z.B. ca. 0,5 µA + 4,2 µA = 4,7 µA, wobei gleichzeitig die Funkstörungen deutlich unter den zugelassenen Störpegeln liegen. Der äußerst geringe, durch den Optokoppler 62 möglicherweise zusätzlich entstehende Ableitstrom kann hier vernachlässigt werden. Außerdem wurde beobachtet, daß bei hohen Frequenzen über 10 MHz praktisch keine leitungsgebundenen Funk-Störspannungen mehr vorhanden sind. Zum Vergleich sei bemerkt, daß bei Haushaltsgeräten der Schutzklassen 1 und 2 mit Standard-Funkentstörungen die Ableitströme bis zu ca. 3,5 mA betragen.

Die beschriebene Resonanzwandler - Topologie wird bisher immer nur dort angedeutet, wo sie aufgrund von im wesentlichen konstanten Eingangsspannungen und konstanten Lasten im Hinblick auf hohe Schaltfrequenzen, geringe Funkstörungen und einen hohen Gesamtwirkungsgrad besonders vorteilhaft ist. Beim erfindungsgemäßen Schaltnetzteil sind diese Vorteile wegen der Schwankungen in der Netzspannung und der stark schwankenden Lasten (Fig. 4) nicht voll nutzbar. Im Interesse einer starken Begrenzung der Ableitströme bei ausreichend guter Funkentstörung wird erfindungsgemäß vielmehr insbesondere auf die Erzielung eines optimalen Wirkungsgrades bewußt verzichtet, zumal dies bei den hier interessierenden Geräten mit vergleichsweise kleinen Leistungen in Kauf genommen werden kann.

Die Erfindung ist nicht auf das beschriebene Ausführungsbeispiel beschränkt, das auf vielfache Weise abgewandelt werden könnte. Insbesondere ist klar, daß der Wert von 50 pF für den Y-Kondensator 56 in Abhängigkeit vom geforderten Ableitstrom in weiten Grenzen variiert werden kann. Sind z. B. bei einer maximalen Netzspannung von 264 V und 60 Hz nur Ableitströme von weniger als 50 µA gefordert, könnten Y-Kondensatoren 56 mit Kapazitäten von 500 pF und weniger verwendet werden. Weiter könnte anstelle des bevorzugten Serienresonanzkreises auch ein Parallelresonanzkreis oder eine Mischform von beiden vorgesehen werden, wobei das beschriebene Schaltnetzteil 29 auch für andere als medizinische Anwendungen geeignet ist. Außerdem könnte die Schalteranordnung 42 als Vollbrücke ausgebildet und zu diesem Zweck mit vier statt nur zwei Leistungstransistoren versehen sein. Ferner sind die angegebenen Werte für die verschiedenen Bauelemente usw. nur als bevorzugte Ausführungsbeispiele zu betrachten, die vom Fachmann in Abhängigkeit von der jeweiligen speisenden Wechselspannung, der gewünschten Ausgangsspannung und des geforderten Ableitstroms des Schaltnetzteils geändert werden können. Dasselbe gilt für die sonstige Ausbildung des Schaltnetzteils 29. Weiter kann, wie nicht näher erläutert wurde, zwischen der Primärseite und der Sekundärseite des Schaltnetzteils 29 eine übliche, z. B. für 4000 V ausreichende Isolation 77 (Fig. 2) vorgesehen werden, um außer einer Isolation gegen Ableitströme auch eine Isolation vorzusehen, die eine ausreichend große Durchschlagfestigkeit sicherstellt. Dadurch wird erreicht, daß zur Begrenzung der Ableitströme nicht nur eine geringe Koppelkapazität 56, sondern auch eine hohe ohmsche Isolation zwischen den spannungsführenden Teilen und den berührbaren Teilen (Gehäuse, Ausgangsseite der Stromversorgung) beiträgt. Schließlich versteht sich, daß die verschiedenen Merkmale auch in anderen als den beschriebenen und dargestellten Kombinationen angewendet werden können.

## Patentansprüche

1. Schaltnetzteil, insbesondere für medizinische Geräte, zur Erzeugung einer vorgewählten Gleichspannung (Uₐ) aus einer speisenden Wechselspannung, enthaltend: Eingänge (31, 32) für die Wechselspannung, einen ersten Gleichrichter (39) mit Glättungskondensator (40) zur Umwandlung der Wechselspannung in eine Gleichspannung, eine Schalteranordnung (42) zur Erzeugung einer Rechteckspannung aus der Gleichspannung, einen Übertrager (49), einen mit dem Übertrager (49) verbundenen, die vorgewählte Gleichspannung (Uₐ) liefernden, zweiten Gleichrichter (51) mit Glättungskondensator (52), wenigstens einen zwischen die Primärseite und die Sekundärseite des Übertragers (49) geschalteten Y-Kondensator (56) zur Funkentstörung und ein Steuerteil (63) zur periodischen Betätigung der Schalteranordnung (42), **gekennzeichnet durch** einen zwischen die Schalteranordnung (42) und den Übertrager (49) geschalteten Resonanzkreis (54, 55), wobei die Betätigung der Schalteranordnung (42) mit einer auf den Resonanzkreis (54, 55) abgestimmten Frequenz erfolgt und wobei der Y-Kondensator (56) eine so gewählte Kapazität besitzt, daß er bei der Nennfrequenz und dem Maximalwert der speisenden Wechselspannung nur unterhalb von 50 µA liegende Ableitströme zuläßt.

2. Schaltnetzteil nach Anspruch 1, **dadurch gekennzeichnet, daß** die Kapazität des Y-Kondensators (56) so gewählt ist, daß der Arbeitsstrom unterhalb von 7 µA liegt.

3. Schaltnetzteil nach Anspruch 1 oder 2, **dadurch gekennzeichnet, daß** das Steuerteil (63) als Teil einer Regelschaltung für die vorgewählte Gleichspannung (Uₐ) ausgebildet ist.

4. Schaltnetzteil nach einem der Ansprüche 1 bis 3, **dadurch gekennzeichnet, daß** der Übertrager (49) nebeneinander angeordnete Primär- und Sekundärwicklungen (70, 71) aufweist.

5. Schaltnetzteil nach einem der Ansprüche 1 bis 4, **dadurch gekennzeichnet, daß** der Übertrager (49) auf der Primärseite eine Primärwicklung (70) und zwischen dieser und einem zur Aufnahme eines Kerns (72) bestimmten Spulenkörper (73) eine Schirmwicklung (74) aufweist.

6. Schaltnetzteil nach einem der Ansprüche 1 bis 5, **dadurch gekennzeichnet, daß** der Resonanzkreis (54, 55) ein Serienresonanzkreis ist.

7. Schaltnetzteil nach einem der Ansprüche 1 bis 6, **dadurch gekennzeichnet, daß** zwischen die Eingänge (31, 32) und den ersten Gleichrichter (39) ein mit stromkompensierten Drosseln (37) versehenes Netzfilter (38) geschaltet ist.

## Claims

1. Switched-mode power supply, especially for medical equipment, for generating a pre-selected DC voltage (Uₐ) from a supplying AC voltage, said power supply comprising:
- inputs (31, 32) for the AC voltage,
- a first rectifier (39) with a filter capacitor (40), for converting the AC voltage into a DC voltage,
- a switch arrangement (42) for generating a square wave voltage from the DC voltage,
- a transformer (49),
- a second rectifier (51) with a filter capacitor (52), connected to the transformer (49) and supplying the pre-selected DC voltage (Uₐ),
- at least one Y-capacitor (56) which is connected between the primary side and the secondary side of the transformer (49) for interference suppression, and
- a control unit (63) for periodically actuating the switch arrangement (42),
**characterised by** a resonant circuit (54, 55) connected between the switch arrangement (42) and the transformer (49), the switch arrangement (42) being actuated with a frequency which is adjusted to the resonant circuit (54, 55) and the Y-capacitor (56) having a capacity so selected that it allows only leakage currents below 50 µA at the nominal frequency and the maximum value of the supplying AC voltage.

2. Switched-mode power supply according to claim 1, **characterised in that** the capacity of the Y-capacitor (56) is so selected that the operating current is below 7 µA.

3. Switched-mode power supply according to claim 1 or 2, **characterised in that** the control unit (63) is designed as part of a control circuit for the pre-selected DC voltage (Uₐ).

4. Switched-mode power supply according to one of claims 1 to 3, **characterised in that** the transformer (49) has primary and secondary windings (70, 71) arranged beside one another.

5. Switched-mode power supply according to one of claims 1 to 4, **characterised in that** the transformer (49) has on the primary side a primary winding (70) and, between the latter and a coil former (73) intended to receive a core (72), a shielding winding (74).

6. Switched-mode power supply according to one of claims 1 to 5, **characterised in that** the resonant circuit (54, 55) is a series resonant circuit.

7. Switched-mode power supply according to one of claims 1 to 6, **characterised in that** a mains filter (38), provided with compensated-current chokes (37), is connected between the inputs (31, 32) and the first rectifier (39).

## Revendications

1. Alimentation à découpage, destinée en particulier à des appareils médicaux, prévue pour générer une tension continue présélectionnée (Uₐ) à partir d'une tension alternative d'alimentation, comprenant: des entrées (31, 32) pour la tension alternative, un premier redresseur (39) avec condensateur de lissage (40) pour convertir la tension alternative en une tension continue, un agencement de commutateurs (42) pour générer une tension rectangulaire à partir de la tension continue, un transformateur (49), un deuxième redresseur (51) avec condensateur de lissage (52), relié au transformateur (49), délivrant la tension continue (Uₐ) présélectionnée, au moins un condensateur Y (56) branché entre le côté primaire et le côté secondaire du transformateur (49) pour l'antiparasitage et une unité de commande (63) pour l'actionnement périodique de l'agencement de commutateurs (42), **caractérisée par** un circuit résonnant (54, 55) branché entre l'agencement de commutateurs (42) et le transformateur (49), l'agencement de commutateurs (42) étant actionné à une fréquence accordée sur le circuit résonnant (54, 55) et le condensateur Y (56) possédant une capacité choisie de telle manière qu'il n'autorise que des courants de fuite inférieurs à 50 µA à la fréquence nominale et à la valeur maximale de la tension alternative d'alimentation.

2. Alimentation à découpage selon la revendication 1, **caractérisée par le fait que** la capacité du condensateur Y (56) est choisie de telle manière que le courant de fuite soit inférieur à 7 µA.

3. Alimentation à découpage selon la revendication 1 ou 2, **caractérisée par le fait que** l'unité de commande (63) est formée comme une partie d'un circuit de régulation de la tension continue présélectionnée (Uₐ).

4. Alimentation à découpage selon l'une des revendications 1 à 3, **caractérisée par le fait que** le transformateur (49) présente des enroulements primaire et secondaire (70, 71) disposés l'un à côté de l'autre.

5. Alimentation à découpage selon l'une des revendications 1 à 4, **caractérisée par le fait que** le transformateur (49) présente du côté primaire un enroulement primaire (70) et, entre celui-ci et un corps de bobine (73) destiné à recevoir un noyau (72), un enroulement écran (74).

6. Alimentation à découpage selon l'une des revendications 1 à 5, **caractérisée par le fait que** le circuit résonnant (54, 55) est un circuit résonnant série.

7. Alimentation à découpage selon l'une des revendications 1 à 6, **caractérisée par le fait qu'**un filtre secteur (38) muni de bobines d'arrêt ou restrictrices (37) compensées en courant est branché entre les entrées (31, 32) et le premier redresseur (39).
